**Europäisches Patentamt**

**European Patent Office**

**Office européen des brevets**

(19)

(11) Veröffentlichungsnummer : **0 242 533 B1**

(12) **EUROPÄISCHE PATENTSCHRIFT**

(45) Veröffentlichungstag der Patentschrift :
16.01.91 Patentblatt 91/03

(51) Int. Cl.⁵ : **B01D 61/04,** B01D 65/08,
C02F 1/78

(21) Anmeldenummer : **87102516.9**

(22) Anmeldetag : **23.02.87**

(54) Verfahren und Vorrichtung zur Aufbereitung von Speisewasser mittels Ozon für die Umkehrosmose.

(30) Priorität : **11.03.86 CH 996/86**

(43) Veröffentlichungstag der Anmeldung :
**28.10.87 Patentblatt 87/44**

(45) Bekanntmachung des Hinweises auf die
Patenterteilung :
**16.01.91 Patentblatt 91/03**

(84) Benannte Vertragsstaaten :
**CH DE FR GB LI**

(56) Entgegenhaltungen :
**DE-A- 3 243 817**
**US-A- 3 550 782**
**US-A- 4 053 399**

(73) Patentinhaber : **BBC Brown Boveri AG**
**Haselstrasse**
**CH-5401 Baden (CH)**

(72) Erfinder : **Baumann, Hans, Dr.**
**Brunnengässli 5**
**CH-5452 Staretschwil (CH)**
Erfinder : **Klein, Hans-Peter, Dr.**
**Boldistrasse 84**
**CH-5415 Rieden (CH)**
Erfinder : **Stucki, Samuel, Dr.**
**Sternenstrasse 7**
**CH-5415 Nussbaumen (CH)**

## Beschreibung

Die Erfindung geht aus von einem Verfahren und einer Vorrichtung zur Aufbereitung von Speisewasser mittels Ozon für die Umkehrosmose nach der Gattung des Oberbegriffs des Anspruchs 1 und des Anspruchs 2.

Bei der Umkehrosmose wird im Verlauf der Zeit auf der Oberfläche der Membranen die Bildung von Deckschichten ("Fouling") beobachtet, welche den Betrieb bis zum Unterbruch beeinträchtigen können. Es ist bekannt, dass die Bildung derartiger schädlicher Deckschichten durch Zusatz von Ozon zum Speisewasser (Rohwasser) verringert werden kann (Vergl. Lozier and Siska, Journal AWWA, 1985, p. 60).

Die elektrolytische Erzeugung von Ozon in Zellen mit Feststoffelektrolyt ist bekannt (Vergl. US-A-4 416 747 und H.-P.Klein und S.Stucki, "The Production of Ozone by Electrolysis and its Application in high Purity Water Systems", Conference Proceedings 7th Ozone World Congress, 9-12 Sept. 1985, Tokyo).

Der Erfindung liegt die Aufgabe zugrunde, ein einfaches Verfahren sowie eine entsprechende Vorrichtung zur Aufbereitung von Speisewasser mittels Ozon für die Umkehrosmose anzugeben, welches sich in einfacher Weise auch in bestehenden Anlagen anwenden lässt.

Diese Aufgabe wird durch die im kennzeichnenden Teil der Ansprüche 1 und 2 angegebenen Merkmale gelöst.

Die Erfindung wird anhand eines durch eine Figur näher erläuterten Ausführungsbeispiels beschrieben.

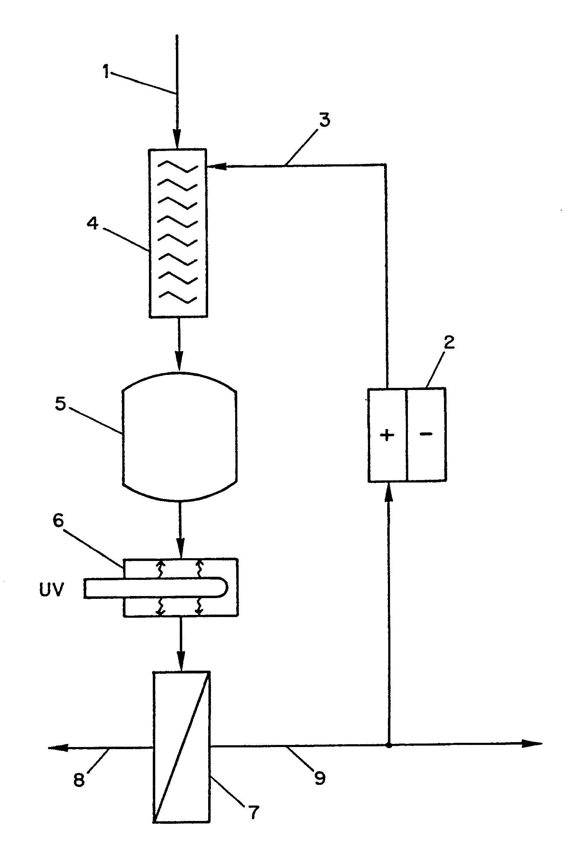

Dabei zeigt die Figur ein Fliessbild des Verfahrens mit den hauptsächlichsten Elementen der Vorrichtung.

1 ist der Rohwassereintritt der Anlage. 2 stellt eine mit einem organischen Feststoffelektrolyten (Membran) ausgerüstete Elektrolysezelle dar. Anoden- und Kathodenseite sind durch +- bzw. --Zeichen angedeutet. 3 ist der Ozoneintritt in das vom Speisewasser durchströmte Mischgefäss 4. 5 stellt einen Verweilzeitbehälter dar, während anschliessend ein Gefäss 6 zur Restozonvernichtung folgt. Im vorliegenden Fall wird dies durch eine UV-Strahlungsquelle bewerkstelligt, deren Strahlung durch gewellte Pfeile angedeutet ist. 7 ist die eigentliche Einrichtung für Umkehrosmose, welche die Aufteilung in Konzentrat und Permeat bewerkstelligt. 8 stellt den Konzentrataustritt, 9 den Permeataustritt dar. Vom Permeat wird ein Teilstrom abgezweigt und der Anodenseite der $O_3$-Elektrolysezelle 2 zugeführt.

## Ausführungsbeispiel :

Siehe Figur !

Im Mischgefäss 4 wurde das über den Rohwassereintritt 1 ankommende Speisewasser mit dem über den Ozoneintritt 3 zugeführten ozonhaltigen sog. "Starkwasser" gemischt. Die Flüssigkeit wurde dem aus Stahl bestehenden Verweilzeitbehälter 5 von 100 l Inhalt zugeleitet. Der Flüssigkeitsstrom passierte hierauf ein Gefäss 6 zur Restozonvernichtung, welcher mit einer UV-Lampe (Hg-Niederdruckstrahler) ausgerüstet war. In diesem Gefäss wurde das überschüssige, nicht für die beabsichtigten Reaktionen verbrauchte Ozon entfernt. Die Einrichtung 7 für Umkehrosmose bestand aus einem Hohlfaserelement von Du Pont. Vom Permeatstrom wurde ein Teilstrom abgezweigt und der Anodenseite (+) einer Elektrolysezelle 2 zugeführt. Diese besass eine Elektrodenfläche von 30 cm² und wurde mit einem Strom von 25 A betrieben. Die Zellenspannung betrug 3,48 V.

Im übrigen stellten sich die Betriebsdaten wie folgt :

| | Wassermenge (l/h) | Leitfähigkeit (µS/cm) | $O_3$-Konzentration (g/m$^3$) |
|---|---|---|---|
| **Einrichtung Umkehrosmose:** | | | |
| Eingang | 780 | 380 | 0 |
| Konzentrat | 220 | 1850 | 0 |
| Permeat | 560 | 10 | 0 |
| $O_3$-Zelle: Eingang | 30 | 10 | 0 |
| $O_3$-Zelle: Ausgang | 30 | 10 | 30 |
| Rohwassereintritt | 750 | 395 | 0 |
| Mischgefäss: Ausgang | 780 | 380 | 1 |
| **Verweilzeitbehälter:** | | | |
| Ausgang | 780 | 380 | 0,1 |

Das Gefäss 6 zur Restozonvernichtung kann statt mit einem UV-Strahler auch mit einem Aktivkohlefilter bestückt sein. Die Einrichtung 7 für Umkehrosmose kann alternativ auch Wickel- oder Plattenelemente aufweisen. Als Membranwerkstoffe für diese Elemente kommen Zelluloseazetat oder Verbundmaterialien in Frage.

## Ansprüche

1. Verfahren zur Aufbereitung von Speisewasser mittels Ozon für die Umkehrosmose, wobei das Speisewasser mit Ozon beladen wird, dadurch gekennzeichnet, dass zur Ozonerzeugung eine mit einem Feststoffelektrolyten ausgerüstete Elektrolysezelle (2) verwendet wird, deren Anodenseite über einen Nebenstrom von einem Teil des Permeats gespeist und das mit Ozon beladene Starkwasser in ein Mischgefäss (4) zurückgeführt wird.

2. Vorrichtung zur Aufbereitung von Speisewasser mittels Ozon für die Umkehrosmose, dadurch gekennzeichnet, dass zur Ozonerzeugung eine Elektrolysezelle (2) vorgesehen ist, dass im Hauptstrom ein Mischgefäss (4) mit Rohwassereintritt (1) und Ozoneintritt (3), ferner ein Verweilzeitbehälter (5) sowie ein Gefäss zur Restozonvernichtung (6) und eine Einrichtung für Umkehrosmose (7) vorhanden ist und dass die $O_3$-Elektrolysezelle (2) über einen Nebenstrom am Permeataustritt (9) angeschlossen ist.

## Claims

1. Process for the treatment, by means of ozone, of feed water for reverse osmosis, the feed water being charged with ozone, characterized in that, for the generation of ozone, an electrolysis cell (2) which is provided with a solid electrolyte is used, the anode side of the cell being fed from part of the permeate, via a side stream, and the rich water, charged with ozone, is fed back into a mixing vessel (4).

2. Device for the treatment, by means of ozone, of feed water for reverse osmosis, characterized in that an electrolysis cell (2) is provided for the generation of ozone, wherein a mixing vessel (4) with untreated-water inlet (1) and ozone inlet (3), furthermore a direct contact time container (5), a residual-ozone destruction vessel (6), and a reverse osmosis device (7) are present in the main stream, and in that the $O_3$ electrolysis cell (2) is connected to the permeate outlet (9) via a side stream.

## Revendications

1. Procédé de traitement, au moyen d'ozone, d'eau d'alimentation pour osmose inverse, l'eau d'alimentation étant chargée d'ozone, caractérisé en ce que, pour produire l'ozone, on utilise une cellule électrolytique (2) qui est munie d'une électrode solide, le côté anode de la cellule étant chargé d'une partie du perméat, par un courant latéral, et l'eau riche, chargée d'ozone, est renvoyée dans un mélangeur (4).

2. Dispositif de traitement, au moyen d'ozone, d'eau d'alimentation pour osmose inverse, caractérisé en ce qu'une cellule électrolytique (2) est prévue pour produire l'ozone, dans lequel un mélangeur (4) comportant une entrée d'eau non traitée (1) et une entrée d'ozone (3), ainsi qu'un récipient à contact prolongé (5), un récipient de destruction de l'ozone résiduel (6) et un dispositif d'osmose inverse (7) sont présents dans le courant principal, et en ce que la cellule électrolytique à $O_3$ (2) est raccordée à la sortie de perméat (9) par l'intermédiaire d'un courant latéral.